## Europäisches Patentamt

(19) **European Patent Office**

**Office européen des brevets**

(11) Veröffentlichungsnummer: **0 103 162**
**B1**

(12) # EUROPÄISCHE PATENTSCHRIFT

(45) Veröffentlichungstag der Patentschrift:
**13.05.87**

(51) Int. Cl.⁴: **B 66 C 13/46,** A 63 J 1/02

(21) Anmeldenummer: **83107865.4**

(22) Anmeldetag: **09.08.83**

(54) **Mess- und Steuereinrichtung für an Seilen befestigte Lasten, insbesondere für Theaterpunktzüge.**

(30) Priorität: **13.08.82 DE 3230213**

(43) Veröffentlichungstag der Anmeldung:
**21.03.84 Patentblatt 84/12**

(45) Bekanntmachung des Hinweises auf die Patenterteilung:
**13.05.87 Patentblatt 87/20**

(84) Benannte Vertragsstaaten:
**AT BE CH DE FR IT LI NL SE**

(56) Entgegenhaltungen:
**DE - A - 2 649 370**
**DE - B - 1 030 982**
**FR - A - 1 438 839**

(73) Patentinhaber: **Bayerische Bühnenbau GmbH, Am Forst 17, D-8480 Weiden/Opf. (DE)**

(72) Erfinder: **Bauer, Gerhard, Dipl.-Ing., Am Schiesslweiher, D-8481 Schwarzenbach (DE)**

(74) Vertreter: **Popp, Eugen, Dr. et al, MEISSNER, BOLTE & PARTNER Widenmayerstrasse 48 Postfach 86 06 24, D-8000 München 86 (DE)**

# Beschreibung

Die Erfindung betrifft eine Mess- und Steuereinrichtung für an Seilen befestigte Lasten, insbesondere für Theaterpunktzüge, mit einer Seiltrommel, mit einer ersten Messeinrichtung, die die Winkelstellung und/oder Drehzahl der Seiltrommel erfasst, mit einem die Seiltrommel antreibenden Motor, mit einer zweiten Messeinrichtung, die optische Markierungen des Seiles abtastet, mit einer Auswerteeinrichtung, die die Messergebnisse beider Messeinrichtungen miteinander vergleicht, und mit einer Steuereinrichtung, die in Abhängigkeit von vorgegebenen Sollwerten der ausgefahrenen Seillänge und der ermittelten, tatsächlich ausgefahrenen Seillänge den Motor steuert.

Eine derartige Mess- und Steuereinrichtung ist in der DE-A 3 103 708 beschrieben. Dabei sind dort allerdings keine Angaben darüber gemacht, wie die Messfühler der zweiten Messeinrichtung anzuordnen sind, um eine exakte Messung und Steuerung unter den in der Praxis auftretenden Bedingungen zu erreichen.

Aus der DE-B 1 030 982 ist eine Teufenzeigereinrichtung bekannt, bei der Veränderungen einer Relativstellung von Magnetjoch zu Förderseil durch die Seilprofilierung Änderungen des magnetischen Flusses hervorrufen, wobei diese Änderungen des magnetischen Flusses gemessen und zu Steuerzwecken herangezogen werden.

Aus der DE-A 1 478 763 ist eine Vorrichtung zur Standanzeige und programmierten Zielfahrt bei Theatereinrichtungen, wie z.B. Dekorationszügen, Punktzügen, Vorhängen, Podien, Bühnenwagen und Drehbühnen beschrieben, bei der der Istwert der ausgefahrenen Seillänge durch eine Schlitzscheibe mit Gebern an der Seiltrommel erfasst wird. In einem einzigen Rechner für alle überwachten bzw. gesteuerten Theatereinrichtungen werden diese Istwerte mit Sollwerten verglichen, woraus entsprechende Steuersignale für den bzw. die Antriebsmotoren erzeugt werden.

Nachteilig an dieser Vorrichtung ist, dass die Messgenauigkeit und damit auch die Steuergenauigkeit einerseits durch das relativ grobe Auflösungsvermögen des Winkelkodierers bzw. der Schlitzscheibe mit den Gebern beschränkt ist und dass andererseits durch Belastung hervorgerufene Seildehnungen nicht berücksichtigt werden können. Dies führt einerseits zu unpräzisen Bewegungsabläufen, ungenauen Positionen von beispielsweise Scheinwerfern, Dekorationen etc. und zu ebenfalls unerwünschten Nachsteuerungen. Auch können kritische Dehnungen der Seile infolge von Materialfehlern, überhöhter Belastung etc. bei diesem bekannten System nicht festgestellt werden. Demzufolge besteht auch keine Möglichkeit zu vorbeugenden Massnahmen gegen Unfälle, die durch etwaigen Seilbruch entstehen.

Aus der Zeitschrift «Bühnentechnische Rundschau» 1979, Heft 2, Seiten 17 bis 20 ist eine Steuereinrichtung für Prospektzüge bekannt, bei der in gleicher Weise wie bei der DE-A 1 478 763 die ausgefahrene Seillänge durch Winkelschrittgeber gemessen wird, die jedem Zug zugeordnet sind. Auch hier treten die gleichen, oben beschriebenen Nachteile auf.

Aufgabe der Erfindung ist es, die Mess- und Steuereinrichtung der eingangs genannten Art dahingehend zu verbessern, dass die Mess- und Steuergenauigkeit insbesondere unter Berücksichtigung der Seildehnung verbessert wird.

Diese Aufgabe wird erfindungsgemäss dadurch gelöst, dass die zweite Messeinrichtung mehrere optische Messfühler enthält, deren Abstände so gewählt sind, dass gleichzeitig maximal zwei von ihnen jeweils eine Seilmarkierung erfassen.

Hierdurch ist es einerseits möglich, die Seildehnung zu messen, was bei der Messung der Winkelstellung der Seiltrommel nicht möglich ist. Andererseits ist es auch möglich, Zwischenstellungen zwischen den einzelnen Segmenten bzw. Zähnen des Winkelschrittgebers zu erfassen.

Somit ist das Auflösungsvermögen nur noch durch die Breite der Markierungen begrenzt, wobei die tatsächlich ausgefahrene Seillänge, unter Berücksichtigung der Seildehnung gemessen und zur Steuerung verwendet wird und nicht nur die angenommene Seillänge des ungedehnten Seiles. Zusätzlich wird durch die Erfassung der Seildehnung auch die Sicherheit erhöht, da einem drohenden Seilbruch stets eine übermässige Dehnung vorausgeht, welche erfasst werden kann.

Das Mess- und Steuerprinzip der Erfindung kann somit überall dort angewandt werden, wo Lasten an Seilen sehr genau bewegt werden sollen, beispielsweise auch bei Aufzügen, Kränen usw.

Nach einer Variante der Erfindung sind die optischen Messfühler in Seillängsrichtung hintereinander angeordnet, wobei ihr Abstand dem wechselseitigen Abstand der Seilmarkierungen des ungedehnten Seiles plus dem n-fachen eines Inkrementes entspricht, wobei n der ganzzahlige Index des jeweiligen Messfühlers ist. Die Abstände zwischen den einzelnen Messfühlern nehmen hierbei kontinuierlich fortschreitend zu. Nach einer Variante entspricht der Abstand zwischen dem nullten und dem ersten Messfühler genau dem Abstand zwischen zwei benachbarten Seilmarkierungen, so dass bei ungedehntem Seil diese beiden Messfühler immer gemeinsam ansprechen. Der Abstand zwischen dem ersten und dem zweiten Messfühler beträgt dann dem Abstand zwischen zwei benachbarten Seilmarkierungen plus einem vorgewählten Wert $(\Delta l)$. Ist das Seil in dem Bereich zwischen drei benachbarten Seilmarkierungen, d.h. im Bereich von zwei Messintervallen um den Betrag $\Delta l$ gedehnt, so sprechen gleichzeitig der nullte und der zweite Messfühler an.

Nach einer anderen Variante ist der Abstand zwischen dem nullten und dem ersten Messfühler bereits gleich der Länge (l) zwischen zwei be-

nachbarten Seilmarkierungen des ungedehnten Seiles zuzüglich des Inkrementes Δl. Bei ungedehntem Seil spricht somit bei entsprechender Lage des Seiles gegenüber dem nullten Messfühler nur der letztere an, während die übrigen nicht ansprechen.

Nach einer anderen Variante der Erfindung sind die Abstände benachbarter optischer Messfühler nach Art einer Noniusteilung, bezogen auf den Abstand der Seilmarkierungen des ungedehnten Seiles, festgelegt.

Die Messfühler sind vorzugsweise in seitlichen Öffnungen eines Rohres angeordnet, in dessen Inneren ein Stück des Seiles verläuft. Die Messfühler können hierbei längs einer geraden Linie angeordnet sein, sie können jedoch auch auf einer rings um das Rohr verlaufenden Schraubenlinie angeordnet sein.

Eine besonders gut optisch abtastbare und dauerhafte Seilmarkierung erhält man dadurch, dass die Seilmarkierungen als schraubenlinienförmige Markierung aufgebracht sind derart, dass eine Kardeele des Seiles andersfarbig ist als die übrigen Kardeelen. Als besonders günstig bei Stahlseilen hat sich herausgestellt, die die Markierung bildende Kardeele aus Wolframdraht herzustellen. Dieser unterscheidet sich selbst bei Verschmutzung durch Öl, Staub oder ähnlichem noch deutlich von den übrigen Stahlkardeelen, wobei der Farbunterschied durch Abtrieb usw. nicht beeinträchtigt wird.

Nach einer vorteilhaften Weiterbildung der Erfindung enthält die zweite Messeinrichtung eine den optischen Messfühlern nachgeschaltete Auswerteeinrichtung, welche durch dynamisches Ansprechen eines vorbestimmten optischen Messfühlers aktivierbar ist und das gleichzeitige Ansprechen des maximal einen weiteren Messfühlers erfasst. Jedesmal wenn eine Seilmarkierung an dem vorbestimmten optischen Messfühler, beispielsweise dem nullten Messfühler vorbeiläuft, wird die zweite Messeinrichtung aktiviert und überprüft, ob zu diesem Zeitpunkt eine weitere Seilmarkierung einem der weiteren Messfühler gegenüberliegt. Hieraus ist dann die Seildehnung feststellbar.

Bei einer konkreten Ausgestaltung dieses Gedankens weist die Auswerteeinrichtung ein Parallel-Eingabe/Parallel-Ausgabe-Register auf, dessen Aktivier- oder Takteingang mit dem vorbestimmten optischen Messfühler verbunden ist und dessen Dateneingänge jeweils mit einem der übrigen optischen Messfühler verbunden sind. Hierdurch wird eine schaltungstechnisch besonders einfache Lösung realisiert. Sobald der vorbestimmte optische Messfühler, beispielsweise der nullte Messfühler eine Seilmarkierung erfasst, wird der Messvorgang eingeleitet, und es wird festgestellt, ob einer bzw. welcher der weiteren Messfühler zu diesem Zeitpunkt eine Seilmarkierung erfasst, was dann in den entsprechenden Registerplatz eingeschrieben wird.

Allerdings ist es auch möglich, die Aktivierung des Registers durch ein externes Steuersignal einzuleiten, beispielsweise durch eine Flanke eines Messimpulses des Winkelcodierers der ersten Messeinrichtung. In diesem Falle sind dann alle optischen Messfühler mit den parallelen Eingängen des Registers verbunden. Die zweite Messeinrichtung erlaubt dann die Messung von Zwischenwerten zwischen einzelnen Impulsen des Winkelcodierers der ersten Messeinrichtung.

In dem erstgenannten Fall, bei dem ein vorbestimmter optischer Messfühler mit dem Aktivier- oder Takteingang des Registers verbunden ist, sieht eine vorteilhafte Ausgestaltung der Erfindung vor, dass dem Register ein Festwertspeicher nachgeschaltet ist, der durch den Inhalt des Registers — ggf. nach einer Code-Umwandlung mittels eines Demultiplexers — adressierbar ist, wobei unter jeder Adresse ein vorgegebener Multiplikationsfaktor abgespeichert ist, und dass ein Multiplizierer vorgesehen ist, dessen Eingänge einerseits mit dem Ausgang des Festwertspeichers und andererseits mit der ersten Messeinrichtung für die Winkelstellung der Seitentrommel verbunden sind, wobei der Ausgang des Multiplizierers der tatsächlich ausgefahrenen Seillänge entspricht.

Die erste Messeinrichtung gibt hierbei einen Grundwert für die ausgefahrene Seillänge des ungedehnten Seiles vor, wobei mittels der über die zweite Messeinrichtung gewonnenen Seildehnung ein Multiplikationsfaktor bestimmt wird, mit der der Grundwert der ausgefahrenen Seillänge multipliziert wird, um die tatsächlich ausgefahrene Seillänge unter Berücksichtigung der Dehnung zu erhalten.

Vorzugsweise ist der Festwertspeicher ein programmierbarer Festwertspeicher (PROM). Hierdurch können die gewünschten Multiplikationsfaktoren einfach programmiert werden, wodurch die Mess- und Steuereinrichtung an verschiedene Aufgabenstellungen angepasst werden kann.

Nach einer Weiterbildung der Erfindung ist ein Vergleicher vorgesehen, dessen Eingänge einerseits mit einem weiteren Festwertspeicher für eine vorgegebene zulässige Seildehnung und andererseits mit dem Ausgang der zweiten Messeinrichtung verbunden sind und der in Abhängigkeit von dem Vergleich ein Warn- und/oder Steuersignal erzeugt. Hierdurch können rechtzeitig Gegenmassnahmen bei übermässiger Seildehnung, die einer Bruchgefahr vorausgeht, ergriffen werden.

Im folgenden wird die Erfindung anhand eines Ausführungsbeispieles im Zusammenhang mit der Zeichnung ausführlicher erläutert. Es zeigen:

Fig. 1 eine Prinzipskizze eines Ausschnittes der Mess- und Steuereinrichtung; und
Fig. 2 ein Blockschaltbild der Auswerteschaltung der Mess- und Steuereinrichtung.

Gleiche Bezugszeichen in beiden Figuren bezeichnen gleiche Teile.

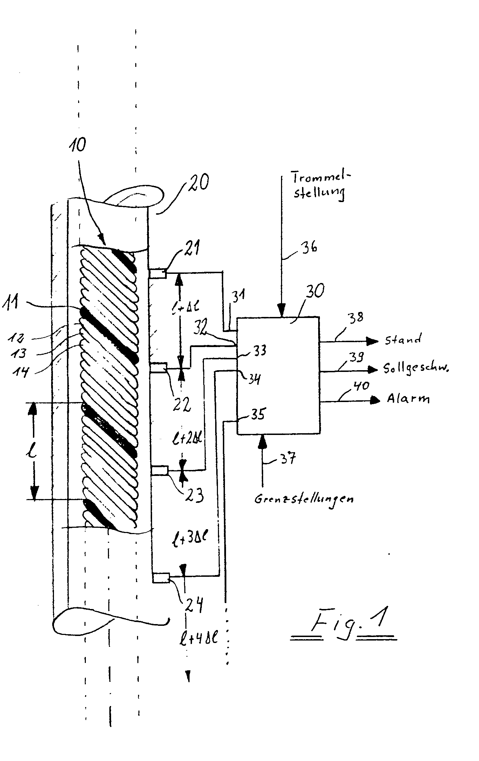

In Fig. 1 ist ein Seil 10 gezeigt, dessen oberes Ende an einer (nicht dargestellten) Seiltrommel befestigt ist. Das Seil 10 ist hierbei vorzugsweise ein geschlagenes Stahlseil, dessen einzelne Kardeelen 12, 13, 14 aus einzelnen Stahldrähten geschlagen sind. Das Seil 10 weist in regelmässigen Abständen optisch abtastbare Seilmarkierungen auf, welche nach dem in der Fig. 1 dargestellten bevorzugten Ausführungsbeispiel so aufgebracht sind, dass eine Kardeele 11 andersfarbig ist als die übrigen Kardeelen 12, 13, 14. Besonders vorteilhaft ist es, die die Seilmarkierung darstellende Kardeele 11 aus Wolframdraht auszubilden. In Seillängsrichtung gesehen, erscheint die Kardeele 11 jeweils nach einem Abstand 1 wieder an der gleichen Seite des Seiles 10, so dass bei in gerader Linie angeordneten Messfühlern der Abstand der einzelnen dort erkennbaren Seilmarkierungen 1 beträgt. Am unteren Ende des Seiles 10 kann eine (nicht dargestellte) Last befestigt werden.

Das Seil 10 verläuft über eine bestimmte Länge innerhalb eines Rohres 20, welches Öffnungen zur Aufnahme optischer Messfühler 21, 22, 23 bzw. 24 aufweist. Die Anzahl der Messfühler kann hierbei beliebig sein, je nach Anforderung an die Messgenauigkeit. Die Mindestanzahl der optischen Messfühler ist zwei, wobei in diesem Falle dann jedoch nur festgestellt werden kann, ob das Seil 10 eine vorgegebene Dehnung hat oder nicht. In dem dargestellten Ausführungsbeispiel sind die Messfühler 21 bis 24 in Seillängsrichtung längs einer geraden Linie angeordnet. Natürlich ist es auch möglich, die Messfühler in anderer Anordnung an dem Rohr 20 zu befestigen, beispielsweise längs einer Schraubenlinie um das Rohr 20. Auch sei darauf hingewiesen, dass nicht nur eine Kardeele 11 als Seilmarkierung ausgebildet sein muss. Es ist genauso denkbar, mehrere, jedoch nicht benachbarte Kardeelen als Seilmarkierung zu verwenden.

Besonders wichtig ist der gegenseitige Abstand der einzelnen optischen Messfühler 21 bis 24 bezogen auf den Abstand der Seilmarkierungen. Als generelle Regel gilt, dass der jeweilige Abstand der einzelnen optischen Messfühler voneinander so gewählt ist, dass maximal zwei Messfühler jeweils eine Seilmarkierung erfassen können. In dem in Fig. 1 dargestellten Ausführungsbeispiel ist der Abstand wie folgt gewählt: Der Abstand zwischen den Messfühlern 21 und 22 beträgt 1 + einem Inkrement $\Delta$l. Der Abstand zwischen den Messfühlern 22 und 23 beträgt 1 + 2 $\Delta$l; der Abstand zwischen den Messfühlern 23 und 24 beträgt 1 + 3 $\Delta$l. Bei einer Anzahl von n Messfühlern beträgt der Abstand zwischen dem Messfühler n−1 und dem Messfühler n dann 1 + (n-l) $\Delta$l. 1 ist hierbei stets der Abstand zweier benachbarter Seilmarkierungen.

Bei ungedehntem Seil 10 und unter der Voraussetzung, dass die Anzahl n der optischen Messfühler und die Grösse des Inkrementes $\Delta$l so gewählt sind, dass (n-l) $\Delta$l kleiner als l ist, steht beim Vorbeilaufen des Seiles 10 an den Messfühlern 21...24 zu jedem Zeitpunkt maximal nur eine Seilmarkierung einem Messfühler derart gegenüber, dass sie von ihm erfasst wird. Wird nun das Seil 10 durch eine Belastung so gedehnt, dass es jeweils auf der Länge 1 um den Betrag $\Delta$l gedehnt

ist, so stehen zu einem Zeitpunkt dem Messfühler 21 und dem Messfühler 22 jeweils eine Seilmarkierung gegenüber. Den übrigen Messfühlern steht zu diesem Zeitpunkt keine weitere Seilmarkierung gegenüber, da beispielsweise im Bereich des Messfühlers 23 die entsprechende Seilmarkierung noch um die Strecke $\Delta$l vor dem Messfühler liegt.

Ist das Seil 10 auf der Strecke 1 um den Betrag 1,5 · $\Delta$l gedehnt, so sprechen gleichzeitig nur die Messfühler 21 und 23 an. Ist das Seil 10 auf der Strecke 1 um 2 $\Delta$l gedehnt, so sprechen gleichzeitig die Messfühler 21 und 24 an; usw.

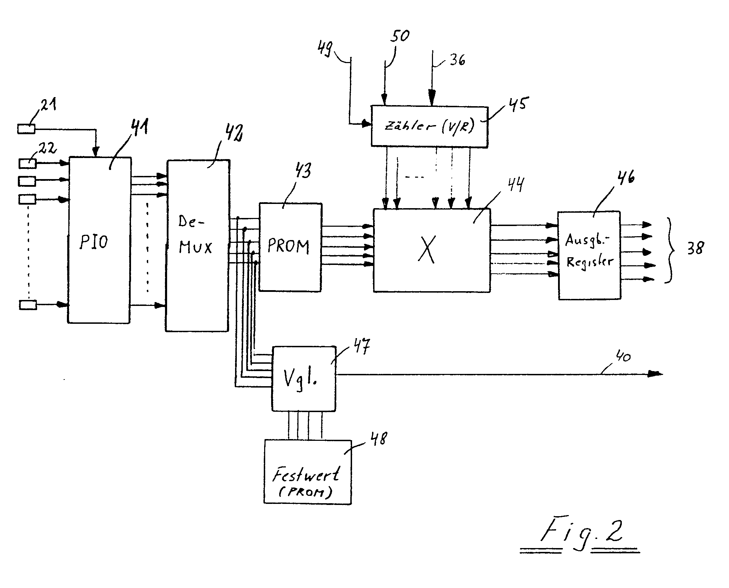

Die Ausgänge der optischen Messfühler 21, 22, 23, 24 usw. sind jeweils mit Eingängen 31, 32, 33, 34 usw. einer Auswerteeinrichtung 30 verbunden. Diese Auswerteeinrichtung wird detaillierter im Zusammenhang mit Fig. 2 erläutert. Im Ergebnis erhält die Auswerteeinrichtung 30 über diese Eingänge 31, 32 usw. das Messergebnis der optischen Messfühler 21...24 und somit das Messergebnis der «zweiten Messeinrichtung».

Einem weiteren Eingang der Auswerteeinrichtung 30 werden über die Leitung(en) 36 die Signale der ersten Messeinrichtung übermittelt, welche die Winkelstellung der Seiltrommel wiedergeben. Aus den Messwerten der ersten und der zweiten Messeinrichtung ermittelt dann die Auswerteeinrichtung die tatsächlich ausgefahrene Seillänge, welche dann über die Leitung 38 ausgegeben wird. Zusätzlich können der Auswerteeinrichtung 30 noch über eine Leitung 37 obere und untere Grenzstellungen des Seiles 10 eingegeben werden, so dass die Auswerteeinrichtung 30 sicherstellen kann, dass das Seil 10 nicht über diese Punkte hinaus gefahren wird. Sofern die Auswerteeinrichtung 30 die Steuerung des Antriebsmotors für die Seiltrommel übernimmt, erscheint an dem Ausgang 39 ein Signal, das der Sollgeschwindigkeit des Antriebsmotors entspricht. Schliesslich wird auf der Leitung 40 ein Alarmsignal, welches ggf. auch den Motor anhält, ausgegeben, wenn eine übermässige Seildehnung festgestellt wurde.

Fig. 2 zeigt ein detaillierteres Blockschaltbild der Auswerteeinrichtung 30. Die Ausgänge der Messfühler 21, 22 usw. werden einem Parallel-Eingabe/Parallel-Ausgabe-Register 41 (Parallel-Input/Output; PIO) zugeführt. Nach einer Variante der Erfindung, bei welcher eine dynamische Messung vorgenommen wird und der optische Messfühler 21 als Bezugsgrösse der Messung gewählt ist, ist der Ausgang des Messfühlers 21 mit einem Aktivier- oder Takteingang des Registers 41 verbunden, während die übrigen Messfühler 22...24 mit den Dateneingängen verbunden sind. Dies hat zur Folge, dass das Register 41 nur dann Daten der Messfühler 22, 23 usw. annimmt, wenn der Messfühler 21 angesprochen hat.

Natürlich ist es auch möglich, den Messzeitpunkt durch ein externes Signal zu bestimmen, das beispielsweise von dem Winkelcodierer für die Trommelstellung abgeleitet ist.

In dem Ausführungsbeispiel der Fig. 2, bei welchem das Register 41 durch ein Signal an dem Messfühler 21 getriggert wird, kann somit nur ein Registerplatz eine Information, beispielsweise eine logische «Eins» enthalten. Der jeweilige Registerplatz gibt dann die Seildehnung an.

Die Ausgänge des Registers 41 sind über einen Demultiplexer 42 mit Adresseingängen eines Festwertspeichers 43, der vorzugsweise ein programmierbarer Festwertspeicher (PROM) ist, verbunden. Der Demultiplexer 42 führt hierbei eine Code-Umwandlung durch. In dem Festwertspeicher 43 sind unter jedem Speicherplatz festgelegte Multiplikationsfaktoren abgespeichert, wobei letztlich jedem Ansprechen eines bestimmten Messfühlers und damit jeder Seildehnung ein bestimmter Wert zugeordnet ist. Diese Multiplikationsfaktoren werden einem Multiplizierer 44 zugeführt, der an seinem anderen Multiplikationseingang das Messergebnis der ersten Messeinrichtung für die Trommelstellung erhält. Im konkreten Ausführungsbeispiel wird dieses Messergebnis über einen Vorwärts-Rückwärts-Zähler 45 erhalten, dessen Zähleingang über die Leitung 36 die Impulse des Winkelcodierers der Seiltrommel zugeführt werden. Über einen Steuereingang 49, der durch die Drehrichtung des Motors beaufschlagt wird, wird die Zählrichtung festgelegt. So wird beispielsweise beim Ablassen des Seiles 10 der Zähler 45 als Vorwärtszähler betrieben, während beim Auffahren des Seiles 10 der Zähler 45 als Rückwärtszähler betrieben wird. Über einen Eingang 50 kann der Zähler 45 noch auf seine Nullstellung zurückgesetzt werden.

Da der Inhalt des Zählers 45 die ausgefahrene Seillänge eines ungedehnten Seiles 10 darstellt und da die Multiplikationsfaktoren aus dem Festwertspeicher 43 im Ergebnis den Dehnungsfaktor des Seiles 10 darstellen, so ergibt die Multiplikation dieser beiden Werte die tatsächliche Länge des ausgefahrenen Seiles 10. Dieses Multiplikationsergebnis wird in einem Ausgaberegister 46 gespeichert und über die Leitungen 38 als Standanzeige ausgegeben.

Zur Ermittlung einer kritischen bzw. vorgegebenen Seildehnung ist noch ein Vergleicher 47 vorgesehen, dem einerseits die Ausgangssignale des Demultiplexers 42 zugeführt werden und andererseits fest vorgegebene Werte für die Seildehnung aus einem weiteren Festwertspeicher 48. Überschreitet die gemessene Seildehnung den in dem Festwertspeicher 48 vorgegebenen Wert, so gibt der Vergleicher 47 auf der Leitung 40 ein Alarmsignal ab, das die Bedienperson der Mess- und Steuereinrichtung warnt und/oder den Motor abschaltet. Der Festwertspeicher 48 kann ebenfalls ein programmierbarer Festwertspeicher (PROM) sein.

In dem Ausführungsbeispiel der Fig. 2 dienen die optischen Messfühler 21, 22 usw. zur Ermittlung der Seildehnung, wobei die Messgenauigkeit bzw. das Auflösevermögen durch die Genauigkeit des Winkelcodierers begrenzt ist.

In Fällen, bei denen das Auflösungsvermögen des Winkelcodierers verhältnismässig schlecht ist, kann die Messgenauigkeit durch die zweite Messeinrichtung mit den optischen Messfühlern verbessert werden. In diesem Falle sind die wechselseitigen Abstände der optischen Messfühler nach Art einer Noniusteilung festgelegt. Die einzelnen Messintervalle zwischen zwei Segmenten oder Zähnen des Winkelcodierers werden dann durch die optischen Messfühler aufgeteilt. In diesem Falle muss das Messergebnis der optischen Messfühler dem Messergebnis des Winkelcodierers hinzuaddiert werden, so dass anstelle des Multiplizierers 44 dann ein Addierer verwendet wird. Bei geeigneter Normierung der Messgrössen und entsprechender Code-Umwandlung in dem Demultiplexer 42 kann unter Umständen auch der Festwertspeicher 43 fortgelassen werden. Der Messfühler 21 ist dann auch mit einem Dateneingang des Registers 41 zu verbinden, während der Übernahmeimpuls für das Register 41 an seinem Aktivier- bzw. Takteingang aus einer externen Quelle, beispielsweise einem Taktgeber stammt.

**Patentansprüche**

1. Mess- und Steuereinrichtung für an Seilen befestigte Lasten, insbesondere für Theaterpunktzüge, mit einer Seiltrommel, mit einer ersten Messeinrichtung, die die Winkelstellung und/oder die Drehzahl der Seiltrommel erfasst, mit einem die Seiltrommel antreibenden Motor, mit einer zweiten Messeinrichtung (21...24), die optische Markierungen (11...14) des Seiles (10) abtastet, mit einer Auswerteeinrichtung (30), die die Messergebnisse beider Messeinrichtungen miteinander vergleicht, und mit einer Steuereinrichtung, die in Abhängigkeit von vorgegebenen Sollwerten der ausgefahrenen Seillänge und der ermittelten, tatsächlich ausgefahrenen Seillänge den Motor steuert, dadurch gekennzeichnet, dass die zweite Messeinrichtung mehrere optische Messfühler (21...24) enthält, deren Abstände $(1+n\Delta l)$ so gewählt sind, dass gleichzeitig maximal zwei von ihnen jeweils eine Seilmarkierung (11) erfassen.

2. Mess- und Steuereinrichtung nach Anspruch 1, dadurch gekennzeichnet, dass die optischen Messfühler (21...24) in Seillängsrichtung hintereinander angeordnet sind und ihr Abstand dem wechselseitigen Abstand der Seilmarkierungen (11) des ungedehnten Seiles (10) plus dem n-fachen eines Inkrementes $(\Delta l)$ entspricht, wobei n der ganzzahlige Index des jeweiligen Messfühlers ist.

3. Mess- und Steuereinrichtung nach Anspruch 1, dadurch gekennzeichnet, dass die Abstände benachbarter optischer Messfühler (21...24) nach Art einer Noniusteilung, bezogen auf den Abstand der Seilmarkierungen (11) des ungedehnten Seiles (10), festgelegt sind.

4. Mess- und Steuereinrichtung nach einem der Ansprüche 1 bis 3, dadurch gekennzeichnet, dass die optischen Messfühler (21...24) in seitlichen Öffnungen eines Rohres (20) angeordnet sind, in dessen Inneren ein Stück des Seiles (10) verläuft.

5. Mess- und Steuereinrichtung nach einem der Ansprüche 1 bis 4, dadurch gekennzeichnet, dass die Seilmarkierungen (11...14) als eine schraubenlinienförmige Markierung aufgebracht sind, derart, dass eine Kardeele (11) des Seiles (10) andersfarbig ist als die übrigen Kardeelen (12...14).

6. Mess- und Steuereinrichtung nach Anspruch 5, dadurch gekennzeichnet, dass die die Markierungen bildende Kardeele (11) aus Wolframdraht besteht.

7. Mess- und Steuereinrichtung nach einem der Ansprüche 1 bis 6, dadurch gekennzeichnet, dass die zweite Messeinrichtung eine den optischen Messfühlern (21...24) nachgeschaltete Auswerteeinrichtung (30) enthält, welche durch dynamisches Ansprechen eines vorbestimmten optischen Messfühlers (21) aktivierbar ist und das gleichzeitige Ansprechen des maximal einen weiteren Messfühlers (22...24) erfasst.

8. Mess- und Steuereinrichtung nach Anspruch 7, dadurch gekennzeichnet, dass die Auswerteeinrichtung (30) ein Parallel-Eingabe/Parallel-Ausgabe-Register (41) aufweist, dessen Aktivier- oder Takteingang mit dem vorbestimmten optischen Messfühler (21) verbunden ist und dessen Dateneingänge jeweils mit einem der übrigen Messfühler (22...24) verbunden sind.

9. Mess- und Steurereinrichtung nach Anspruch 8, dadurch gekennzeichnet, dass dem Register (41) ein Festwertspeicher (43) nachgeschaltet ist, der durch den Inhalt des Registers (41) – gegebenenfalls nach einer Code-Umwandlung mittels eines Demultiplexers (22) – adressierbar ist, wobei unter jeder Adresse ein vorgegebener Multiplikationsfaktor abgespeichert ist, und dass ein Multiplizierer (44) vorgesehen ist, dessen Eingänge einerseits mit dem Ausgang des Festwertspeichers (43) und andererseits mit der ersten Messeinrichtung (45) für die Winkelstellung der Seiltrommel verbunden sind, wobei der Ausgang des Multiplizierers (44) der tatsächlich ausgefahrenen Seillänge entspricht.

10. Mess- und Steuereinrichtung nach Anspruch 9, dadurch gekennzeichnet, dass der Festwertspeicher ein programmierbarer Festwertspeicher (PROM) ist.

11. Mess- und Steuereinrichtung nach einem der Ansprüche 7 bis 10, gekennzeichnet durch einen Vergleicher (47), dessen Eingänge einerseits mit einem weiteren Festwertspeicher (48) für eine vorgegebene zulässige Seildehnung und andererseits mit dem Ausgang der zweiten Messeinrichtung (41 bzw. 42) verbunden sind und der in Abhängigkeit von dem Vergleich ein Warn- und/oder Steuersignal erzeugt.

## Claims

1. A measuring and control device for loads suspended from cables, in particular for lifting stage settings, comprising a winding drum, first measuring means for detecting the angular position and/or the rotational speed of the winding drum, a motor for driving the winding drum, second measuring means (21...24) for scanning optical marks (11...14) provided on the cable (10), an analyzer (30) for comparing the measured results from both measuring means, and a control unit for controlling the motor in response to predetermined set-point values of paid-out cable length and the measured actually paid-out cable length, characterised in that the second measuring means includes a plurality of optical sensors (21...24), the spacings $(1+n\Delta l)$ between said sensors being selected such that not more than two sensors will simultaneously detect a cable mark (11).

2. A measuring and control device as claimed in claim 1, characterised in that the optical sensors (21...24) are arranged in series in longitudinal direction of the cable and their spacing corresponds to the mutual spacing of the cable marks (11) of the non-elongated cable (10) plus n-times an increment $(\Delta l)$, n being the integer index of the respective sensor.

3. A measuring and control device as claimed in claim 1, characterised in that the spacings between adjacent optical sensors (21...24) are established like a vernier scale, based on the spacing of the cable marks (11) of the non-elongated cable (10).

4. A measuring and control device as claimed in any of the claims 1 to 3, characterised in that the optical sensors (21...24) are disposed in lateral openings of a tube (20) through the interior of which a portion of the cable (10) extends.

5. A measuring and control device as claimed in any of the claims 1 to 4, characterised in that the cable marks (11...14) are provided as a helical marking such that the colour of one strand (11) of the cable (10) differs from that of the other strands (12...14).

6. A measuring and control device as claimed in claim 5, characterised in that the strand (11) constituting the marks consists of tungsten wire.

7. A measuring and control device as claimed in any of the claims 1 to 6, characterised in that the second measuring means includes an analyzer (30) succeeding the optical sensors (21...24), said analyzer being activated by dynamic response of a predetermined one (21) of the optical sensors for detecting the simultaneous response of the not more than one further sensor (22...24).

8. A measuring and control device as claimed in claim 7, characterised in that the analyzer (30) includes a parallel-input/parallel-output register (41) the enabling or clock input of which is connected to the predetermined optical sensor (21) and the data inputs of which are respectively connected to one of the remaining sensors (22...24).

9. A measuring and control device as claimed in claim 8, characterised in that a read-only memory (43) is connected to the output of the register (41) for being addressed – possibly after code conversion by means of a demultiplexer (22) – by the content of the register (41), a predetermined multiplier factor being stored at each address, and that a multiplier (44) is provided having its inputs connected to the output from the read-only memory (43), on the one hand, and to the first measuring means (45) for measuring the angular position of the winding drum, on the other hand, the output from the multiplier (44) corresponding to the cable length actually paid out.

10. A measuring and control device as claimed in claim 9, characterised in that the read-only memory is a programmable read-only memory (PROM).

11. A measuring and control device as claimed in any of the claims 7 to 10, characterised by a comparator (47) which has its inputs connected, on the one hand, to a further read-only memory (48) for a predetermined acceptable elongation of the cable and, on the other hand, to the output of the second measuring means (41 or 42, respectively), and which produces a warning and/or control signal in response to the comparison.

## Revendications

1. Dispositif de mesure et de commande pour des charges fixées à des câbles, notamment pour soulever des décors de théâtre, comportant un tambour d'enroulement, un premier dispositif de mesure qui détecte la position angulaire et/ou la vitesse de rotation du tambour d'enroulement, un moteur entraînant le tambour d'enroulement, un deuxième dispositif de mesure (21...24), qui explore les repères optiques (11...14) du câble, un dispositif d'évaluation (30) qui compare entre eux les résultats de mesure des deux dispositifs de mesure, et un dispositif de commande qui commande le moteur en fonction de valeurs de consigne prédéterminées de la longueur de câble sortie et de la longueur de câble effectivement sortie détectée, caractérisée en ce que le deuxième dispositif de mesure comporte plusieurs capteurs de mesure optiques (21...24), dont les espacements $(1 + n\Delta l)$ sont choisis de telle sorte que deux au maximum de ces capteurs détectent simultanément chaque fois un repère de câble (11).

2. Dispositif de mesure et de commande selon la revendication 1, caractérisé en ce que les capteurs de mesure optiques (21...24) sont disposés l'un derrière l'autre dans le sens longitudinal du câble et que leur espacement correspond à la distance mutuelle des repères (11) du câble non allongé (10), plus n fois un incrément ($\Delta l$), n étant un indice entier du capteur de mesure correspondant.

3. Dispositif de mesure et de commande selon la revendication 1, caractérisé en ce que les espacements de détecteurs de mesure optiques voisins (21...24) sont fixés à la manière d'une division de Vernier par rapport à la distance entre les repères (11) du câble non allongé (10).

4. Dispositif de mesure et de commande selon l'une des revendications 1 à 3, caractérisé en ce que les capteurs de mesure optiques (21...24) sont disposés dans des ouvertures latérales d'un tube (20) à l'intérieur duquel circule une partie du câble (10).

5. Dispositif de mesure et de commande selon l'une des revendications 1 à 4, caractérisé en ce que les repères de câble (11...14) sont réalisés sous forme de repères hélicoïdaux par le fait qu'un toron (11) du câble (10) a une autre couleur que les autres torons (12...14).

6. Dispositif de mesure et de commande selon la revendication 5, caractérisé en ce que les torons (11) constituant les repères sont des fils de tungstène.

7. Dispositif de mesure et de commande selon l'une des revendications 1 à 6, caractérisé en ce que le deuxième dispositif de mesure comporte un dispositif d'évaluation (30) monté à la suite des capteurs de mesure optiques (21...24), lequel peut être activé par la réaction dynamique d'un capteur de mesure optique prédéterminé (21) et la réaction simultanée d'un autre capteur de mesure (22...24) au maximum.

8. Dispositif de mesure et de commande selon la revendication 7, caractérisé en ce que le dispositif d'évaluation (30) est un registre entrées/sorties parallèles (41) dont l'entrée d'activation ou de rythme est reliée au capteur de mesure optique prédéterminé (21) et dont les entrées de données sont respectivement reliées à un des autres capteurs de mesure (22...24).

9. Dispositif de mesure et de commande selon la revendication 8, caractérisé en ce qu'on monte à la suite du registre (41) une mémoire morte (43) à laquelle ont peut accéder par le contenu du registre (41) – éventuellement après une conversion de code au moyen d'un démultiplexeur (22)–, un facteur de multiplication prédéterminé étant enregistré sous chaque adresse, et on prévoit un multiplicateur (44) dont les entrées sont reliées d'une part à la sortie de la mémoire morte (43) et d'autre part au premier dispositif de mesure (45) pour la position angulaire du tambour d'enroulement, la sortie du multiplicateur (44) correspondant à la longueur de câble effectivement sortie.

10. Dispositif de mesure et de commande selon la revendication 9, caractérisé en ce que la mémoire morte est une mémoire morte programmable (PROM).

11. Dispositif de mesure et de commande selon l'une des revendications 7 à 10, caractérisé par un comparateur (47) dont les entrées sont reliées d'une part à une autre mémoire morte (48) pour un allongement acceptable prédéterminé du câble, et d'autre part à a la sortie du deuxième dispositif de mesure (41, 42), lequel comparateur produit un signal d'avertissement et/ou de commande en fonction de la comparaison.

Fig. 1

Fig.2